**Europäisches Patentamt**

**European Patent Office**

**Office européen des brevets**

(19)

(11) Veröffentlichungsnummer : **0 446 853 B1**

(12) **EUROPÄISCHE PATENTSCHRIFT**

(45) Veröffentlichungstag der Patentschrift :
16.12.92 Patentblatt 92/51

(21) Anmeldenummer : 91103723.2

(22) Anmeldetag : 12.03.91

(51) Int. Cl.⁵ : **B01J 2/12**

(54) **Trommel zur Agglomerierung von feindispersen Stoffen.**

(30) Priorität : **16.03.90 DE 4008479**

(43) Veröffentlichungstag der Anmeldung :
**18.09.91 Patentblatt 91/38**

(45) Bekanntmachung des Hinweises auf die
Patenterteilung :
**16.12.92 Patentblatt 92/51**

(84) Benannte Vertragsstaaten :
**AT DE DK FR GB NL SE**

(56) Entgegenhaltungen :
**BE-A- 528 418
DE-A- 1 257 747
FR-A- 2 435 531**

(73) Patentinhaber : **DELA GESELLSCHAFT FÜR
GRANULIERTECHNIK MBH
Burenstrasse 4
W-4554 Kettenkamp (DE)**

(72) Erfinder : **Heinze, Prof. Dr. Gerald
Burenstr. 4, Niemannshof
W - 4554 Ketenkamp (DE)**

(74) Vertreter : **Finkener und Ernesti Patentanwälte
Heinrich-König-Strasse 119
W-4630 Bochum 1 (DE)**

EP 0 446 853 B1

Jouve, 18, rue Saint-Denis, 75001 PARIS

**Beschreibung**

Die Erfindung betrifft eine Trommel zur Agglomerierung von feindispersen Stoffen, wobei die Trommel im Bereich eines Endabschnittes gelagert und im Bereich des anderen Endabschnittes mit einem Antrieb verbunden ist, mit dem sie um ihre Längsachse drehbar ist, und wobei der Innenraum der Trommel frei von die Agglomerierung beeinflussenden Einbauten ist.

Aus der BE-A 528 418 ist eine einer Granuliereinrichtung vorgeschaltete Trommel bekannt, die dazu dient, Kerne für den anschließenden Granulierprozeß in der Tommel zu bilden. Die vorgeschaltete Trommel ist nicht frei von die Agglomerierung beeinflussenden Einbauten, sondern enthält einen spiralförmigen Grill am Austragende. Mit einer derartigen Trommel ist ein Klassiereffekt nicht erzielbar, da die Förderung und die Granulation, soweit sie überhaupt eintritt, "bergab" erfolgen.

Eine Trommel zur Agglomerierung von feindispersen Stoffen, deren Innenraum frei von die Agglomerierung beeinflussenden Einbauten ist, ist aus der DE-PS 35 03 947 bekannt; sie besteht aus einer an beiden Seiten offenen zylindrischen Trommel, deren Längsachse einen Anstieg in Richtung auf die Austragöffnung aufweist. Bei einer ähnlich ausgebildeten, aus der DE-PS 977 050 bekannten Vorrichtung ist die Trommel auf Hubböcken so gelagert, daß das Austragende aus der horizontalen Lage nach oben verschwenkbar ist. Aus der schweizerischen Patentschrift 315 573 ist es bekannt, Granulate in einer Trommel herzustellen, die als Topf bezeichnet wird. Es handelt sich dabei um eine stark verkürzte Granuliertrommel, die derart geneigt angeordnet sein soll, daß höchstens zwei Drittel der Bodenfläche der Trommel mit Material bedeckt sind. Eine Berechnung ergibt, daß die Bedeckung des Bodens nur dann unter zwei Drittel liegt, wenn die Länge des Topfes kleiner ist als der Durchmesser.

Zur Herstellung von Waschmitteln durch Sprühmischen sind ferner Drehtrommeln bekannt, die die Form eines Doppelkonus haben. Es handelt sich dabei um geschlossene Trommeln, aus denen die fertige Charge diskontinuierlich über eine an der Stelle des größten Durchmessers befindliche Öffnung abgezogen wird. In einer solchen Trommel, wie sie z. B. aus der DE-AS 11 97 064 bekannt ist, ist ein guter Mischeffekt erzielbar unter der Voraussetzung, daß geeignete Einbauten in Form von in bestimmter Weise angeordneten Leitschaufeln vorhanden sind. Der Doppelkonus der Trommel soll dabei bewirken, daß das Mischgut in der Mitte wieder zusammenläuft.

Aus der DE-PS 504 232 ist eine Drehtrommel zur Herstellung von Krümeln aus Rohmehl für die Beschickung von Brennöfen bekannt, bei der es darauf ankommt, das Rohmehl gegebenenfalls unter Zugabe von Kohle gründlich zu durchmischen. Zu diesem Zweck sieht das Patent vor, an dem gegebenenfalls verjüngt ausgebildeten Einlaufende der Trommel Einbauten in Form von Rührschaufeln vorzusehen, die das mit Wasser benetzte Gut zum Einlaßende zurückwerfen. Auch die aus der DE-AS 1 299 598 bekannte Drehtrommel enthält an ihrer Innenwand in bestimmter Weise geneigte Einbauten, um einen Teil des Gutes zur Aufgabeseite zurückzuführen. Dabei geht es ebenfalls in erster Linie um einen Mischeffekt. Demgegenüber bezieht sich die vorliegende Erfindung auf eine Agglomeriertrommel, deren Innenraum frei von Einbauten ist. Rührschaufeln oder andere Inneneinbauten, wie sie bei den bekannten Vorrichtungen benutzt werden, würden gebildete Agglomerate zerstören und lediglich eine Durchmischung bewerkstelligen. Die Zusammenballung feindisperser Stoffe zu Agglomeraten ist mit derartigen Trommeln nicht möglich.

Zum Agglomerieren von Eisenerzen zur Möllervorbereitung für Hochöfen werden seit Jahrzehnten konische Trommeln benutzt, deren konisch zulaufende Fläche sich zur Austrittsseite der Granulate hin öffnet. Während des Granulierens folgen die Granulate der Schwerkraft auf der schiefen Ebene und verlassen die auch als Granulierkonus bezeichnete Trommel an der Stelle, an der diese den größten Durchmesser hat.

Die Erweiterung des Durchmessers in Richtung des Austrags bedingt eine Steigerung der Umfangsgeschwindigkeit in Richtung des Endes der Trommel, an dem das Gut die Trommel verläßt, so daß die von der Trommelwand mitgenommenen Agglomerate kurz vor ihrem Austritt in einer parabolartigen Kurve nach unten stürzen. Dieser als "Katarakt" bezeichnete Effekt wirkt sich auf die Erhaltung und die Gleichmäßigkeit der gebildeten Agglomerate ungünstig aus, da sie durch das Herunterfallen zerstört und kurz vor dem Austritt aus dem Konus neue Agglomerate kaum gebildet werden.

Die Erfindung basiert auf der Erkenntnis, daß bei Verwendung einer Trommel mit einem sich zum Austrittsende hin verjüngenden Konus keine Katarakt-Wirkung auftritt, sondern daß die Agglomerate infolge der geringeren Umlaufgeschwindigkeit im Bereich des Austrittsendes wie auf einer Kaskade abrollen, wodurch die Bildung von Agglomeraten erheblich verbessert wird, ohne daß bereits gebildete Körper durch den Katarakt-Effekt vor ihrem Austritt aus der Trommel zerstört werden.

Unter Berücksichtigung dieser Erkenntnis ist es gelungen, die der Erfindung zugrunde liegende Aufgabe, eine Agglomeriertrommel so auszubilden, daß bei gleichzeitiger Erhöhung der Durchsatzleistung möglichst gleichmäßig klassifizierte Agglomerate erzeugt werden, mit einfachen Mitteln zu lösen.

Ausgehend von einer Granuliertrommel der eingangs beschriebenen Art besteht die Erfindung darin, daß die Trommel die Form eines Doppelkonus mit sich zu den Endabschnitten verjüngenden Wandungen und unterschiedlich langen konusförmigen Abschnitten hat und mindestens an einem Ende offen ist, wobei sich die Austrittsöffnung am Ende des längeren konusförmigen Abschnittes befindet.

Es hat sich überraschenderweise herausgestellt, daß durch die asymmetrische Ausbildung der doppelkonischen Trommel ein hervorragender Klassiereffekt erzielt wird, d. h. daß nahezu gleich große Granulate bzw. Agglomerate entstehen. Versuchsergebnisse haben gezeigt, daß häufig bei der Durchführung von Granulierprozessen auftretende Störungen, die darin bestehen, daß die Agglomerierung außer Kontrolle gerät, d. h. daß besonders viele Agglomerate mit einem unerwünscht großen oder kleinen Durchmesser gebildet werden, die dann, weil sie den nachfolgenden Prozeßgang stören, entfernt und getrennt weiterverarbeitet werden müssen, nicht festgestellt wurden.

Durch die erfindungsgemäße asymmetrische Ausbildung der Trommel gelingt es, die Vorteile sowohl des Katarakt- als auch des Kaskaden-Effektes auszunutzen. In dem Teil der Trommel mit der stärkeren Konizität werden übergroße Granulate durch die Katarakt-Wirkung zerschlagen, während kleinere Granulate mit der gewünschten Größe in den Teil der Trommel, der die geringere Konizität hat, gedrückt, kaskadenartig abgerollt und schließlich ausgetragen werden. Die Kombination von Katarakt- und Kaskaden-Wirkung auf engstem Raum führt zu einer nicht vorhersehbaren Agglomerierung, bei der praktisch gleich große Agglomerate gebildet werden.

Vorzugsweise verläuft die in der mittleren Längsachse der Trommel liegende Drehachse waagerecht. Bei einer Ausführungsform der Erfindung ist die Trommel an beiden Enden offen, wodurch die Öffnungen einen unterschiedlichen Durchmesser haben und sich die Öffnung mit dem größeren Durchmesser am Ende des längeren konusförmigen Abschnittes befindet. Dabei ist die Öffnung mit dem größeren Durchmesser die Austragöffnug für das agglomerierte Material. Der sich zum Austrittsende verjüngende konusförmige Abschnitt hat vorzugsweise die zwei- bis dreifache Länge des kürzeren konusförmigen Abschnittes.

Die Erfindung sieht ferner vor, daß an die Endabschnitte der Trommel ringförmige Segmente angesetzt sind, die an dem einen Ende auf einem Kugellager abrollbar sind und an dem anderen Ende, vorzugsweise am Austrittsende ein Triebteil des Antriebs bilden. Selbstverständlich ist es auch möglich, die Trommel mittels eines Zahnrades anzutreiben, das im Bereich des größten Durchmessers der Trommel angeordnet ist.

Ferner sieht die Erfindung vor, daß in eine der beiden Öffnungen der Trommel eine Zuführungseinrichtung für die zu agglomerierenden Stoffe, die vorzugsweise aus einer Förderschnecke besteht, und in die gleiche oder die andere Öffnung der Trommel eine Sprüheinrichtung mit einem oder mehreren Sprühköpfen eingeführt sind. Die Trommel kann auch so ausgeführt werden, daß sie an dem Ende mit dem kürzeren konusförmigen Abschnitt geschlossen ist. Bei dieser Ausführungsform der Erfindung sind entweder sowohl die Zuführungseinrichtung und die Sprüheinrichtung durch das offene Ende in die Trommel eingeführt oder es wird eine der Leitungen mittig durch das geschlossene Ende der Trommel geführt.

Das Austrittsende der Zuführungseinrichtung und wenigstens einer der Sprühköpfe sind erfindungsgemäß in dem Bereich angeordnet, in dem die Trommel den größten Durchmesser hat.

Weitere Merkmale ergeben sich aus der Zeichnung, auf der verschiedene Ausführungsbeispiele schematisch dargestellt sind. Es zeigen:

Fig. 1 eine an beiden Seiten offene Agglomeriertrommel,

Fig. 2 eine andere Ausführungsform der auf Fig. 1 dargestellten Trommel, Fig. 3 eine an einem Ende geschlossene Agglomeriertrommel,

Fig. 4 eine Trommel zum Agglomerieren von Schlämmen oder dergleichen und

Fig. 5 und Fig. 6 zwei weitere Ausführungsbeispiele einer Trommel.

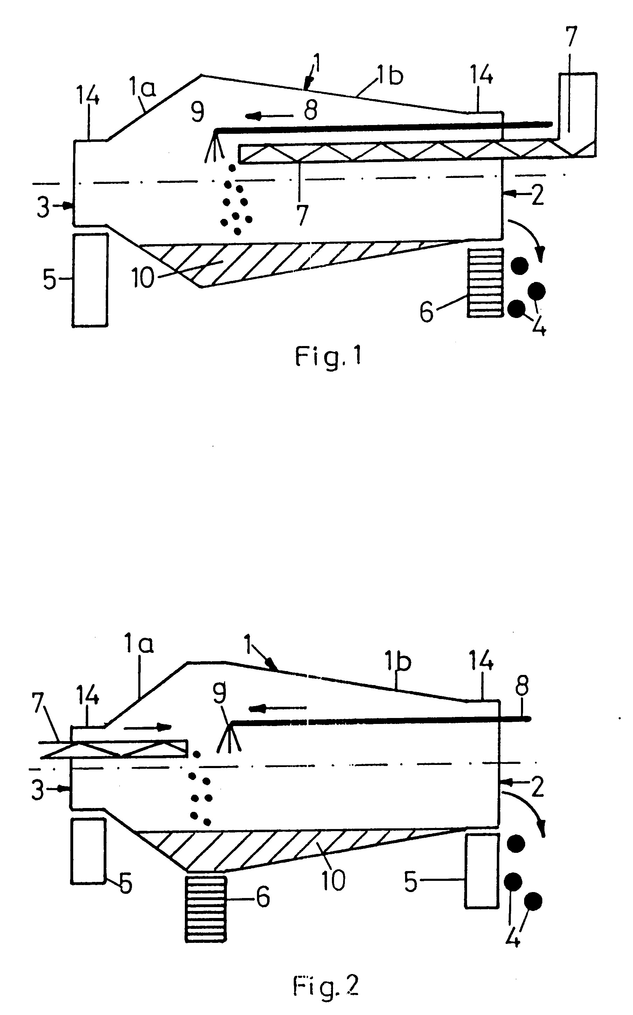

Die im Querschnitt kreisförmige Agglomeriertrommel ist mit (1) bezeichnet; sie besteht aus zwei konusförmigen Abschnitten (1a und 1b), die eine unterschiedliche Länge haben und deren Wandungen sich in Richtung der Enden der Trommel verjüngen, so daß der größte Querschnitt der Trommel außerhalb ihrer mittleren Querebene liegt. Die auf Fig. 1 dargestellte Trommel ist an beiden mit ringförmigen Segmenten (14) versehenen Enden offen; die Öffnung (2) am Ende des durch den längeren konusförmigen Abschnitt (1b) gebildeten Konus ist größer als die Öffnung (3) am Ende des kürzeren Konus. Die größere Öffnung (2) am Ende des konusförmigen Abschnittes (1b), der vorzugsweise etwa zwei- bis dreimal so lang ist wie der konusförmige Abschnitt (1a), ist bei allen dargestellten Ausführungsformen die Austragöffnung, aus der die gebildeten Agglomerate (4) austreten. Mit (5) ist ein Kugellager angedeutet, auf dem das Segment (14) an dem Ende mit der kleineren Öffnung (3) während der Drehbewegung abrollt. Es kann selbstverständlich auch ein das Segment umgebendes Kugellager benutzt werden. Der Antrieb der Trommel erfolgt über einen das Segment (14) an dem Ende mit der größeren Öffnung umgebenden Zahnkranz und ein Zahnrad (6). Statt dessen kann beispielsweise auch ein an dem Segment anliegendes Reibrad als Antrieb dienen. Die Zufuhr des zu agglomerierenden feinkörnigen Stoffes erfolgt bei der auf Fig. 1 dargestellten Ausführungsform über eine Förderschnecke (7), deren Austrittsende etwa im Bereich des größten Durchmessers der Trommel angeordnet ist. Die für die Agglomerierung erforderliche Flüssigkeit wird über eine Leitung (8) zugeführt, die mit einem Sprühkopf (9) versehen ist, der in der Nähe der Austrittsöffnung der Förderschnecke (7) liegt. Die Füllhöhe der von Einbauten freien Trommel ergibt sich aus dem schraffierten Bereich (10). Da die durch die mittlere Längsachse verlaufende Drehachse der Trommel waagerecht verläuft, liegt die untere Kante der größeren Öffnung (2) tiefer als die der Öffnung (3), so daß bei kontinuierlicher Zugabe weiterer Stoffe und Flüssigkeit die während der Rollbewegung gebildeten Agglomerate (4) ständig aus der Öffnung (2) austreten.

Die auf Fig. 2 dargestellte Ausführungsform unterscheidet sich von der vorhergehenden dadurch, daß die Förderschnecke (7) über die kleinere Öffnung in die Trommel geführt ist. Ferner ist die Trommel an beiden Endabschnitten an Kugellagern (5) drehbar gelagert und der Antrieb erfolgt über ein Zahnrad (6), das in einen Zahnkranz eingreift, der die Trommel in dem Bereich mit dem größten Durchmesser umgibt. Selbstverständlich können für den Antrieb der Trommel und ihre Lagerung auch andere bekannte Mittel benutzt werden. Beispielsweise kann der Antrieb auch über eine Kette oder einen Treibriemen erfolgen.

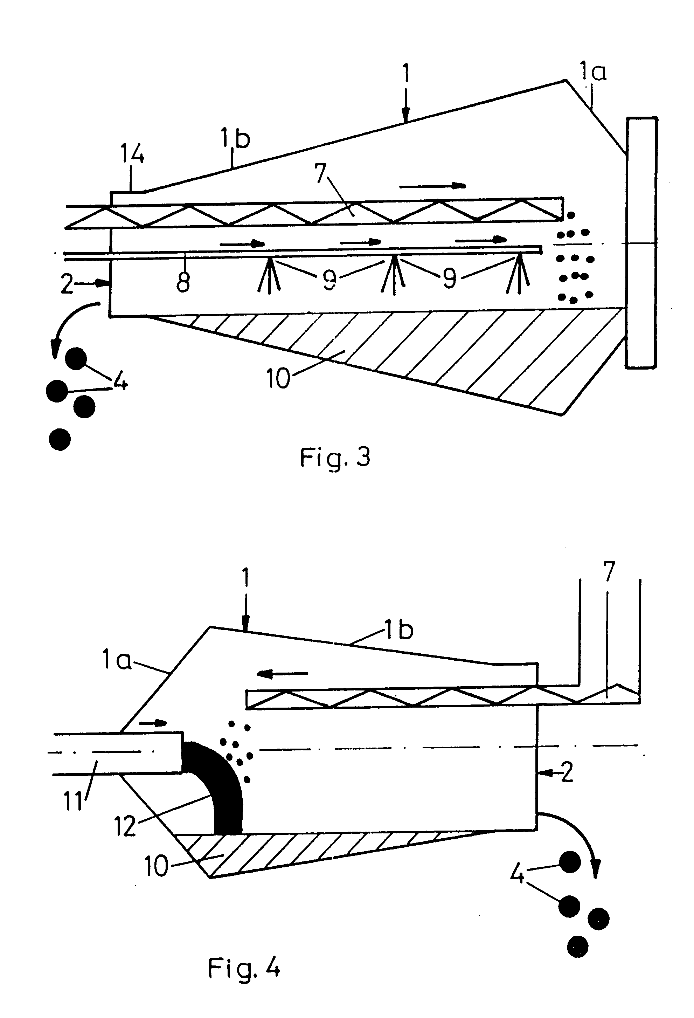

Fig. 3 zeigt eine Trommel, bei der das Ende mit dem kürzeren konusförmigen Abschnitt (1a) geschlossen ist. Die Förderschnecke (7) und die Leitung (8), die mit drei über die Länge der Trommel verteilt angeordneten Sprühdüsen (9) versehen ist, sind über die Austragöffnung (2) in den Innenraum der Trommel eingeführt.

Fig. 4 zeigt eine Trommel, die zum Agglomerieren von Schlämmen, Breien, Filterkuchen oder dergleichen benutzt werden kann. Dabei tritt durch den Boden des kürzeren konusförmigen Abschnittes (1a) mittig eine Leitung (11) ein, an der der Boden drehbar gelagert ist und über die der Schlamm (12) oder dergleichen in die Trommel eingegeben wird. Die Zufuhr der feindispersen Stoffe erfolgt über die Förderschnecke (7), die über die Austragöffnung (2) in die Trommel eingeführt ist.

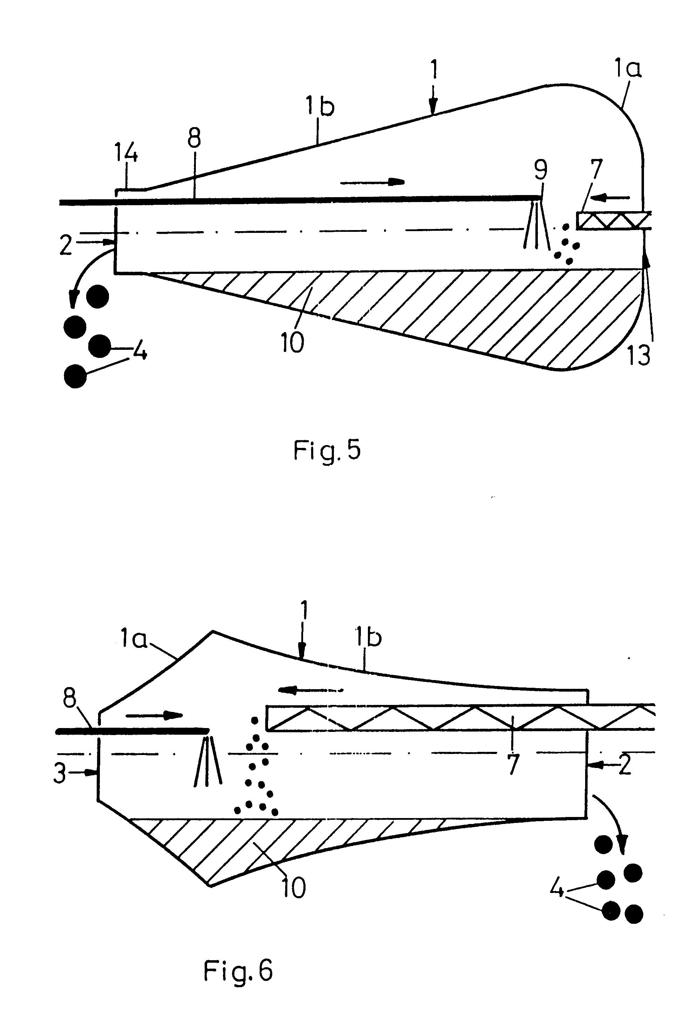

Auf den Fig. 5 und 6 sind zwei weitere Ausführungsbeispiele dargestellt. Fig. 5 zeigt eine Trommel, deren kürzerer konusförmiger Abschnitt (1a) nach außen gewölbt und geschlossen ist, so daß sich insgesamt eine birnenförmige Gestalt ergibt. Die Leitung (8) tritt dabei durch das offene Ende, die Förderschnecke (7) durch den Boden (13) in den Innenraum der Trommel ein. Die auf Fig. 6 dargestellte Agglomeriertrommel ist an beiden Enden offen; die Förderschnecke (7) ist über die Austragöffnung (2), die Leitung (8) über die kleinere Öffnung (3) in die Trommel geführt. Die Wandungen der konusförmigen Abschnitte (1a und 1b) sind leicht nach innen gewölbt.

**Patentansprüche**

1. Trommel zur Agglomerierung von feindispersen Stoffen, wobei die Trommel im Bereich eines Endabschnittes gelagert und im Bereich des anderen Endabschnittes mit einem Antrieb verbunden ist, mit dem sie um ihre Längsachse drehbar ist, und wobei der Innenraum der Trommel frei von die Agglomerierung beeinflussenden Einbauten ist, dadurch gekennzeichnet, daß die Trommel (1) die Form eines Doppelkonus mit sich zu den Endabschnitten verjüngenden Wandungen und unterschiedlich langen konusförmigen Abschnitten (1a, 1b) hat und mindestens an einem Ende offen ist, wobei sich die Austrittsöffnung am Ende des längeren konusförmigen Abschnittes befindet.

2. Trommel nach Anspruch 1, dadurch gekennzeichnet, daß die in der mittleren Längsachse der Trommel (1) liegende Drehachse waagerecht verläuft.

3. Trommel nach den Ansprüchen 1 und 2, dadurch gekennzeichnet, daß sie (1) an beiden Enden offen ist, die Öffnungen (2, 3) einen unterschiedlichen Durchmesser haben und sich die Öffnung (2) mit dem größeren Durchmesser am Ende des längeren konusförmigen Abschnittes (1b) befindet.

4. Trommel nach den Ansprüchen 1 bis 3, dadurch gekennzeichnet, daß der längere konusförmige Abschnitt (1b) die zwei- bis dreifache Länge des kürzeren konusförmigen Abschnittes (1a) hat.

5. Trommel nach den Ansprüchen 1 bis 4, dadurch gekennzeichnet, daß an die Endabschnitte der Trommel (1) ringförmige Segmente (14) angesetzt sind, die an dem einen Ende auf einem Kugellager (5) abrollbar sind und an dem anderen Ende ein Triebteil des Antriebs (6) bilden.

6. Trommel nach den Ansprüchen 1 bis 5, dadurch gekennzeichnet, daß sie (1) in dem Bereich, in dem sie (1) den größten Durchmesser hat, mit einer verschließbaren Öffnung für die Restentleerung versehen ist.

7. Trommel nach den Ansprüchen 1 bis 6, dadurch gekennzeichnet, daß in eine der beiden Öffnungen (2, 3) der Trommel (1) eine Zuführungseinrichtung (7) für die zu agglomerierenden Stoffe und in die gleiche oder die andere Öffnung der Trommel (1) eine Sprüheinrichtung (8) mit einem oder mehreren Sprühköpfen (9) eingeführt ist.

8. Trommel nach den Ansprüchen 1 und 2, dadurch gekennzeichnet, daß sie (1) an dem Ende mit dem kürzeren konusförmigen Abschnitt (1a) geschlossen ist und entweder sowohl die Zuführungseinrichtung (7) und die Sprüheinrichtung (8) durch das offene Ende (2) in die Trommel (1) eingeführt sind oder daß eine der Leitungen (7, 11) mittig durch das geschlossene Ende der Trommel (1) geführt ist.

9. Trommel nach den Ansprüchen 1 bis 8, dadurch gekennzeichnet, daß das Austrittsende der Zuführungseinrichtung (7) und wenigstens einer der Sprühköpfe (9) in dem Bereich der Trommel (1), in dem diese den größten Durchmesser hat, angeordnet sind.

## Claims

1. Drum for the agglomeration of highly disperse substances, in which the drum is mounted in the area of one end section and in the area of the other end section is connected to a drive system with which it can be rotated about its longitudinal axis, and in which the inner space of the drum is free from fittings which influence the agglomeration, characterised in that the drum (1) has the shape of a double cone with walls tapering towards the end sections and conical sections (1a and 1b) of different lengths and is open at least at one end, the discharge aperture being at the end of the longer conical section.

2. Drum as claimed in Claim 1, characterised in that the axis of rotation lying in the central longitudinal axis of the drum (1) runs horizontally.

3. Drum as claimed in Claims 1 and 2, characterised in that it (1) is open at both ends, the apertures (2 and 3) have a different diameter and the aperture (2) with the larger diameter is at the end of the longer conical section (1b).

4. Drum as claimed in Claims 1 to 3, characterised in that the longer conical section (1b) is two to three times the length of the shorter conical section (1a).

5. Drum as claimed in Claims 1 to 4, characterised in that annular segments (14) are fixed to the end sections of the drum (1), which segments can rotate on a ball bearing (5) at the one end and form a drive member of the drive system (6) at the other end.

6. Drum as claimed in Claims 1 to 5, characterised in that it (1) is provided with a closable aperture for emptying residue, in the area in which it (1) has the largest diameter.

7. Drum as claimed in Claims 1 to 6, characterised in that a feed-in device (7) for the substances being agglomerated is inserted into one of the two apertures (2 and 3) of the drum (1), and a spraying device (8) with one or more spraying heads (9) is inserted into the same or the other aperture of the drum (1).

8. Drum as claimed in Claims 1 and 2, characterised in that it (1) is closed at the end with the shorter conical section (1a), and either both the feed-in device (7) and the spraying device (8) are led through the open end (2) into the drum (1) or one of the pipelines (7 and 11) is led centrally through the closed end of the drum (1).

9. Drum as claimed in Claims 1 to 8, characterised in that the discharge end of the feed-in device (7) and at least one of the spraying heads (9) are arranged in the area of the drum (1) in which the latter has the largest diameter.

## Revendications

1. Tambour pour l'agglomération de matières finement dispersées, le tambour étant monté au voisinage d'une région extrême et étant relié, au voisinage de l'autre région extrême, à un entraînement au moyen duquel il peut accomplir une rotation autour de son axe longitudinal, et l'espace interne du tambour étant exempt de dispositifs intégrés exerçant une influence sur l'agglomération, caractérisé par le fait que le tambour (1) revêt la forme d'un double cône à parois se rétrécissant vers les régions extrêmes, et à tronçons tronconiques (1a, 1b) différemment longs, et est ouvert à au moins une extrémité, l'orifice de sortie se trouvant à l'extrémité du tronçon tronconique plus long.

2. Tambour selon la revendication 1, caractérisé par le fait que l'axe de rotation, coïncidant avec l'axe médian longitudinal dudit tambour (1), s'étend horizontalement.

3. Tambour selon les revendications 1 et 2, caractérisé par le fait qu'il (1) est ouvert aux deux extrémités, les orifices (2, 3) présentent un diamètre différent, et l'orifice (2) de diamètre supérieur se trouve à l'extrémité du tronçon tronconique (1b) plus long.

4. Tambour selon les revendications 1 à 3, caractérisé par le fait que le tronçon tronconique (1b) plus long possède une longueur représentant du double au triple de celle du tronçon tronconique (la) plus court.

5. Tambour selon les revendications 1 à 4, caractérisé par le fait que des segments annulaires (14), rapportés sur les régions extrêmes dudit tambour (1), peuvent rouler par l'une de leurs extrémités sur un roulement à billes (5) et forment, par leur autre extrémité, une partie menante de l'entraînement (6).

6. Tambour selon les revendications 1 à 5, caractérisé par le fait qu'il (1) est pourvu, dans la zone dans laquelle il (1) présente le diamètre maximal, d'un orifice obturable pour le vidage résiduel.

7. Tambour selon les revendications 1 à 6, caractérisé par le fait qu'un dispositif (7) d'amenée des matières à agglomérer est engagé dans l'un des deux orifices (2, 3) du tambour (1), et un dispositif de pulvérisation (8), muni d'une ou plusieurs tête(s) de pulvérisation (9), est engagé dans le même orifice ou dans l'autre orifice du tambour (1).

8. Tambour selon les revendications 1 et 2, caractérisé par le fait qu'il (1) est fermé à l'extrémité présentant le tronçon tronconique (la) plus court, et à la fois le dispositif d'amenée (7) et le dispositif de pulvérisation (8) sont engagés dans le tambour (1) à travers l'extrémité ouverte (2), ou bien l'un des conduits (7, 11) est guidé centralement à travers l'extrémité fermée du tambour (1).

9. Tambour selon les revendications 1 à 8, caractérisé par le fait que l'extrémité de sortie du dispositif d'amenée (7), et au moins l'une des têtes de pulvérisation (9), sont disposées dans la zone du tambour (1) dans laquelle ce dernier présente le diamètre maximal.

Fig. 1

Fig. 2

Fig. 3

Fig. 4

Fig. 5

Fig. 6